**Europäisches Patentamt**

**European Patent Office**

**Office européen des brevets**

(19)

(11) Veröffentlichungsnummer : **0 426 887 B1**

(12) # EUROPÄISCHE PATENTSCHRIFT

(45) Veröffentlichungstag der Patentschrift :
**25.11.92 Patentblatt 92/48**

(51) Int. Cl.$^5$ : **F16H 49/00, F16H 1/32,
F16H 57/02**

(21) Anmeldenummer : **89120547.8**

(22) Anmeldetag : **07.11.89**

(54) **Lageranordnung.**

(43) Veröffentlichungstag der Anmeldung :
**15.05.91 Patentblatt 91/20**

(45) Bekanntmachung des Hinweises auf die
Patenterteilung :
**25.11.92 Patentblatt 92/48**

(84) Benannte Vertragsstaaten :
**CH DE FR GB IT LI**

(56) Entgegenhaltungen :
**EP-A- 0 316 713
FR-A- 2 327 453
GB-A- 2 038 992
GB-A- 2 064 685
US-A- 4 003 272
US-A- 4 580 957**

(56) Entgegenhaltungen :
**RUSSIAN ENGINEERING JOURNAL. vol. 53,
no. 2, 1973, MELTON MOWBRAY GB Seiten 20
- 24; A.F.KRAINEV: "Design of wave-typege-
ar-transmission mechanisms"**

(73) Patentinhaber : **Werner Riester KG Armaturen-
und Maschinenantriebe
Renkenrunsstrasse 20
W-7840 Müllheim / Baden (DE)**

(72) Erfinder : **Fickelscher, Kurt
Herderstrasse 19
W-6710 Frankenthal (DE)**

(74) Vertreter : **Patentanwälte Dipl.-Ing. Hans
Schmitt Dipl.-Ing. Wolfgang Maucher
Dreikönigstrasse 13
W-7800 Freiburg i.Br. (DE)**

**Beschreibung**

Die Erfindung bezieht sich auf eine Lageranordnung gemäß den im Oberbegriff des Patentanspruchs 1 angegebenen Merkmalen.

Aus der US-A-45 80 957 ist eine derartige Lageranordnung bekannt, welche in einer Rotationskolbenmaschine zum Einsatz gelangt. In dieser Lageranordnung sind Wälzscheiben paarweise nebeneinander angeordnet und über gegeneinander schwenkbare Exzenter auf einer Antriebswelle abgestützt. Auf den Wälzscheiben ist radial außen ein radial deformierbares Ringelement angeordnet, welches als ein Ringkolben ausgebildet ist und an die Innenfläche einer Zylinderwand gepreßt wird. Mittels den Wälzscheiben wird das Ringelement bzw. der Ringkolben ovalisiert, wobei die Wälzscheiben direkt auf der Innenfläche des Ringelements abrollen. Bei einem derart abgestützten Ringkolben bzw. Ringelement besteht das Problem, daß an der Innenfläche, insbesondere durch Belüften des Ringkolbens, Schmutzablagerungen auftreten. Insbesondere beim Einsatz vergleichsweise weicher Werkstoffe, wie z.B. Austenit, wird der Ringkolben im Abrollbereich durch Aufwalken, und zwar in Saugrichtung betrachtet, wellig. Dies ist nachteilig im Hinblick auf die erforderliche Abdichtung von Zylinder und Ringkolben. Ferner ergeben sich Schwierigkeiten im Hinblick auf die Auswuchtung der vergleichsweise großen umlaufenden Massen und der damit verbundenen nicht unerheblichen Fertigungskosten.

Ferner ist aus der US-A-40 03 272 eine Lageranordnung bekannt, welche in einem Harmonic-Drive-Planetengetriebe zum Einsatz gelangt. Es sind drei gleichartige Wälzscheiben nebeneinander angeordnet, über welche außen das als Planetenrad ausgebildete, radial deformierbare Ringelement geschoben ist. Auf der Antriebswelle sind nebeneinander drei gleichartige Exzenterringe an geordnet, auf welchen die Wälzscheiben mittels jeweils gleichartigen Wälzlagern abgestützt sind. Diese Lageranordnung ergibt eine vergleichsweise große axiale Länge des Planetengetriebes. Infolge eines geschlossenen Lagerringes, der sich über die gleiche axiale Länge wie das deformierbare Planetenrad erstreckt, ergeben sich große Rückstellkräfte und zusätzliche Lagerbelastungen, mit der Folge einer Reduzierung des Wirkungsgrades. Die Beaufschlagung der mittleren Wälzscheibe durch die Radialkräfte ist doppelt so groß wie für die beiden seitlichen Wälzscheiben; die Lebensdauer wird durch das mittlere Lager bestimmt. Da die drei Wälzlager gleichartig ausgebildet sind und den gleichen Innendurchmesser aufweisen, muß für die Montage eine dreiteilige Ausbildung des Antriebsexzenters vorgesehen werden. Desweiteren ergibt sich infolge der gleichartigen Ausbildung der Exzenterringe, Wälzlager und der Wälzscheiben ein hoher Unwuchtanteil, wodurch ein entsprechender Aufwand für das Auswuchten und insgesamt hohe Herstellkosten bedingt sind.

Der Erfindung liegt die Aufgabe zugrunde, die Lageranordnung der gattungsgemäßen Art unter Vermeidung der aufgezeigten Nachteile dahingehend weiterzubilden, daß eine funktionssichere, vielseitig verwendbare und baulich einfache Anordnung erreicht wird.

Die Lösung dieser Aufgabe erfolgt gemäß den im Kennzeichen des Anspruchs 1 angegebenen Merkmalen.

Die Lageranordnung zeichnet sich durch eine einfache Konstruktion und ein geringes Bauvolumen aus und für alle Einsatzzwecke hat sich die in axialer Richtung schmale Bauweise als besonders wichtig erwiesen. Die axiale Sicherung des Ringelements erfolgt mit geringem Aufwand innerhalb der Lageranordnung und ferner wird durch die Abdichtung eine hohe Funktionssicherheit und lange Lebensdauer gewährleistet. Es können handelsübliche, konventionelle Lager zum Einsatz gelangen und durch die Verschiebung der Exzenterringe in radialer Richtung wird in einfacher Weise die für das Ringelement erforderliche Deformation bzw. Ovalisierung vorgegeben. Je nach Einsatzzweck der Lageranordnung kann das Ringelement als dünnwandiger Rotationskolben, Lagerring, Planetenrad oder dergleichen ausgebildet sein. Die Lageranordnung kann für hohe Drehzahlen ebenso zum Einsatz gelangen wie für große Belastungen, wobei im Vergleich mit vorbekannten Anordnungen das Bauvolumen und das Gewicht nicht unwesentlich reduziert werden könne. Vor allem beim Einsatz in Getrieben können radiale Rückstellkräfte reduziert werden und durch den Einsatz von preisgünstigen Werkstoffen können die Herstellkosten reduziert werden. Für Einsatzbereiche mit hohen Drehzahlen können ölgeschmierte Gleitlager zwischen Exzenterringen und Wälzscheiben vorgesehen werden, während für niedrige Drehzahlen bedarfsweise auch selbstschmierende Gleitlager vorgesehen werden können. Aufgrund der geringen axialen Länge ergeben sich neue Einsatzmöglichkeiten, wobei aufgrund der hohen Tragfähigkeit der Lageranordnung insgesamt ein kleines Bauvolumen realisiert werden kann.

In den Unteransprüchen sind besondere Ausgestaltungen und Weiterbildungen der Lageranordnung angegeben.

Die Erfindung wird nachfolgend anhand der in der Zeichnung dargestellten Ausführungsbeispiele näher erläutert. Es zeigen:

Fig. 1 einen Längsschnitt einer Ausführungsform für hohe Belastungen, wobei eine angeflanschte Antriebswelle vorgesehen ist,

Fig. 2 eine axiale Ansicht mit einem geschlitzten Ringelement,

Fig. 3 eine Ausführungsform mit Wälzlagern,

Fig. 4 eine Ausführungsform eines Planetengetriebes mit einem doppeltverzahnten Planetenrad,

Fig. 5 bis 7 Ausführungsformen eines einfachen Stellantriebes mit drei bzw. zwei Wälzscheiben,

Fig. 8 eine axial besonders schmale Ausführungsform mit zwei Wälzscheiben.

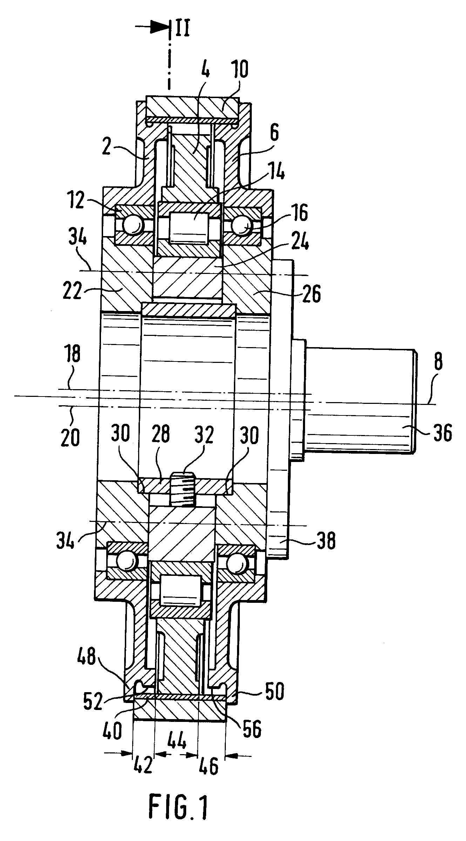

Fig. 1 zeigt die Lageranordnung mit drei Wälzscheiben 2, 4, 6, welche in Richtung einer Längsachse 8 nebeneinander angeordnet sind und zur Ovalisierung eines Ringelements bzw. äußeren Ringkörpers 10 dienen. Der äußere Ringkörper 10 ist ovalisierbar, also abweichend von der exakten Kreis- bzw. Zylinderform radial deformierbar. Die beiden seitlichen Wälzscheiben 2, 6, zwischen welchen die mittlere Wälzscheibe 4 angeordnet ist, sind übereinstimmend ausgebildet und über zwei Lager 12, 16, welche hier als Kugellager ausgebildet sind, auf zwei konzentrischen Ringen 22, 26 abgestützt. Die gemeinsamen Achsen der beiden Lager 12, 16 sind, wie es durch die Lagerachse 18 angedeutet ist, zur Längsachse 8 exzentrisch angeordnet. Auch die mittlere Wälzscheibe 4 ist über ein Lager 14, das hier als ein Zylinder-Rollenlager ausgebildet ist, auf einem mittleren Ring 24 abgestützt. Die Lagerachse 20 des mittleren Lagers 14 ist entsprechend der Lagerachse 18 bezüglich der Längsachse 8 exzentrisch, und zwar entgegengesetzt zur Lagerachse 18, angeordnet. Die beiden seitlichen Exzenter-Ringe 22, 26 werden mittels eines inneren Stützringes 28 im Rahmen dieser Erfindung gegeneinander zentriert und weisen für die Aufnahme des Stützringes 28 jeweils eine Umfangsnut 30 auf. Zur Einstellung der Ovalisierung ist in der Mitte des Stützringes 28 eine Einstellschraube 32 für den mittleren Ring 24 vorgesehen. Die beiden seitlichen Ringe 22, 26 sind, wie durch die gestrichelten Linien 34 angedeutet ist, gegeneinander verschraubt, wobei der mittlere Ring 24 durch Reibschluß zwischen den beiden seitlichen Ringen 22, 26 befestigt ist. Zur Einstellung der Doppelexzentrizität des derart aus Ringen bzw. Exzenterringen aufgebauten Drehkörpers werden die genannten Schraubverbindungen etwas gelöst und mittels der Einstellschraube 32 wird der Abstand zwischen den Lagerachsen 18, 20 vorgeben. Eine präzise Einstellung wird hierdurch ermöglicht, wobei nach dem Anziehen der Schraubverbindungen und das damit erreichte kraftschlüssige Einspannen des mittleren Ringes 24 eine hohe Funktionssicherheit gewährleistet wird. Im Falle einer Überlastung erfolgt eine zusätzliche Abstützung und Sicherung über die Einstellschraube 32 sowie über den Stützring 28 zwischen den beiden seitlichen Ringen 22, 26.

An den seitlichen Ring 26 ist eine Antriebswelle 36 über einen Flansch 38 angeflanscht. Die Verbindung mit dem Flansch 38 erfolgt entsprechend den Linien 34 über die gleichen Schraubverbindungen, die auch zum Verspannen der Ringe 22 bis 26 dienen. Um in zweckmäßiger Weise eine Überlastsicherung zu erhalten, kann nach dem Einstellen des mittleren Ringes 24 die Schraube 32 entfernt werden. Die Vorspannkraft der Verbindung der Ringe 22, 24, 26 wird derart vorgegeben, daß im Falle einer Überlast der Reibschluß des mittleren Ringes 24 überwunden wird und eine radiale Relativbewegung erfolgt.

Wesentlich ist ferner die Abstimmung und Dimensionierung der Lager derart, daß die Tragfähigkeit des mittleren Lagers 14 im wesentlichen der Summe der Tragfähigkeit der beiden seitlichen Lager 12, 16 entspricht. Die beiden seitlichen Lager 12, 16 können also entsprechend kleiner als das mittlere Lager 14 ausgebildet werden, wodurch eine nicht unwesentliche Reduzierung, insbesondere der axialen Abmessungen und des Gewichtes, erreicht wird. Ferner sind die Massen der verschiedenen exzentrisch zueinander angeordneten Bauteile derart aufeinander abgestimmt, daß einen Unwucht praktisch vermieden wird.

Der ovalisierbare Ringkörper ist aus einem normalen Werkstoff gefertigt, wobei keine Härtebehandlung erfolgte. Eine hohe Oberflächenqualität und Festigkeit wird bevorzugt mittels eines eingelegten Präzisions-Stahlbandes 40 erreicht, auf welchem die Wälzscheiben 2, 4, 6 abrollen. Die Breite 44, über welcher die mittlere Wälzscheibe 4 abrollt, ist im wesentlichen gleich groß wie die entsprechenden Breiten 42, 46 der beiden seitlichen wälzscheiben 2, 6 zusammengenommen. Eine gleichmäßige Materialbelastung und Ausnutzung wird sichergestellt. Die axiale Führung des Ringkörpers 10 erfolgt mittels Ringbunden 48, 50, die radial über die Auflageflächen 52, 56 vorstehen. Der axiale Spalt zwischen den Bunden 48, 50 und dem Ringkörper 10 wird derart eng eingestellt, daß eine Abdichtung gewährleistet ist; ggfs. kann überschüssiges Fett durch die genannten Spalte austreten. Von besonderer Bedeutung ist hierbei, daß die Relativbewegung zwischen den Stirnflächen des Ringkörpers 10 und den Wälzscheiben 2, 6 bzw. deren Ringbunden 48, 50 gering sind. Die Bewegung eines Punktes der Stirnfläche des Ringkörpers 10 bezüglich der Anlagefläche des zugehörenden Bundes 48, 50 entspricht in etwa einer Evolute. Die Relativbewegungen sind vergleichbar mit Läppbewegungen, wobei hohe Flächenpressungen oder zu hoher Verschleiß zuverlässig vermieden werden.

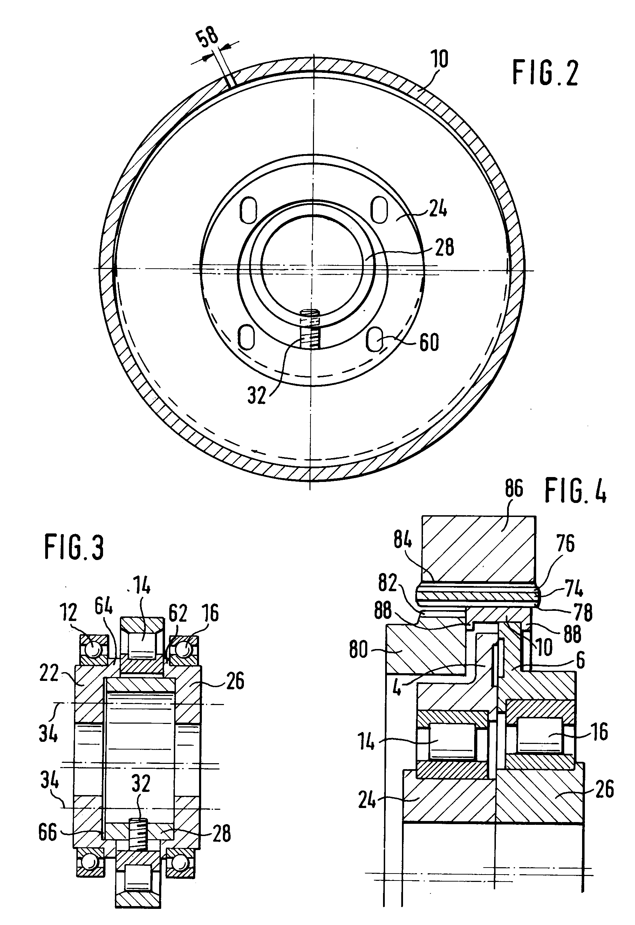

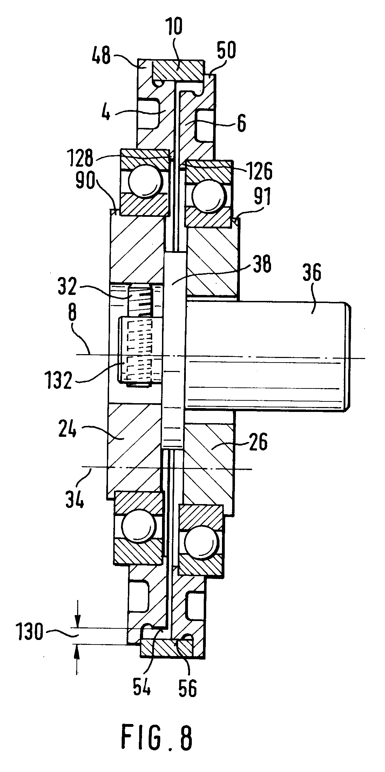

Fig. 2 zeigt schematisch einen Schnitt entlang Schnittlinie II, wobei aus Gründen der Einfachheit die Wälzlager und das Stahlband nicht dargestellt sind. Der Ringkörper 10 weist einen axialen Schlitz 58 auf, wodurch eine Reduzierung der radialen Rückstellkräfte erreicht wird. So wird beispielsweise für eine axiale Breite von 20 mm, einen Außendurchmesser von 100 mm und einen Innendurchmesser von 94 mm des Ringkörpers 10 bei einer Ovalisierung von 2 mm aufgrund des Schlitzes 58 eine Rückstellkraft von 160N (16 kg) erreicht; bei ungeschlitzter Ausführung wäre mit 1300N (130 kg) zu rechnen. Der mittlere Ring 24 weist vier Langlöcher 60 auf, durch welche die eingangs erläuterten Schrauben zur Festspannung zwischen den seitlichen Ringen hindurchgeführt sind. Die Langlöcher 60 sind parallel zu der Axialebene angeordnet, in welche die Einstellschraube 32 vorgesehen ist.

Fig. 3 zeigt eine Ausführungsform, die vor allem für hohe Drehzahlen zum Einsatz gelangt und den anhand von Fig. 1 erläuterten mittleren Ring nicht aufweist. Statt dessen wird der Innenring 62 des mittleren Wälzlagers 14 in einfacher Weise direkt zwischen die seitlichen Ringe 22, 26 eingespannt. Hierzu weisen die beiden seitlichen Ringe 22, 26 Ringbunde 64 auf, an welchen jeweils auf der anderen Seite die Innenringe der Lager 12, 16 für die seitlichen Wälzscheiben gleichfalls anliegen. Die Einstellschraube 32 im Stützring 28 greift unmittelbar am Innenring 62 an. Zwischen dem Stützring 28 und dem Ring 22 ist ein hinreichend großer Spalt 66 vorhanden, damit der Innenring 62 zuverlässig kraftschlüssig zwischen die beiden seitlichen Ringe 22, 26 einspannbar ist.

Fig. 4 zeigt eine besonders zweckmäßige Anwendung der erfindungsgemäßen Lageranordnung, und zwar in einem Planetengetriebe mit einem Planetenrad 74, das eine Außenverzahnung 76 und eine Innenverzahnung 78 aufweist. Dieses Planetengetriebe und weitere entsprechende Ausgestaltungen desselben sind in dem deutschen Patent DE-G-37 38 521 beschrieben. Die konstruktiven Einzelheiten und Funktionsweisen des Planetengetriebes sind der DE-G- 37 38 521 zu entnehmen. Es ist ein Sonnenrad 80 mit einer Außenverzahnung 82 vorhanden, in welches die Innenverzahnung 78 des Planetenrades 74 eingreifen kann. Wie dargestellt, kann ferner die Außenverzahnung 76 des Planetenrades 74 in eine Innenverzahnung 84 eines Hohlrades 86 eingreifen. Die Verzahnungen 82 und 84 weisen unterschiedliche Zähnezahlen auf und das in radialer Richtung flexible Planetenrad 74 wird mittels des ovalisierten Ringkörpers 10 in vorgegebenen Eingriffszonen in die Zahnlücken der Zahnräder hineingedrückt. Es sind hierbei über den Umfang verteilt vier Eingriffszonen vorhanden, wobei jeweils in zwei dieser Eingriffszonen das Planetenrad 74 mit dem Hohlrad 86 und um 90° versetzt mit dem Sonnenrad 80 kämmt. Mittels den beiden Wälzscheiben 4, 6 wird der wiederum mit einem Axialschlitz versehene Ringkörper 10 nach Art einer Doppelnocke ovalisiert, ohne daß hierzu deformierbare Wälzlager erforderlich sind. Vielmehr erfolgt die Abstützung über die beiden Lager 14, 16 herkömmlicher Bauart. Die Wälzscheiben 4, 6 rollen auf der Innenfläche des Ringkörpers ab, der zur axialen Sicherung an seinen Enden jeweils einen radial nach innen gerichteten Ringbund 88 aufweist. Wie ersichtlich, rollen die Wälzscheiben 4, 6 auf der Innenfläche des Ringkörpers 10 axial zwischen den beiden beabstandeten Ringbunden 88 ab. Der Ringkörper 10, der den Lageraußenring bildet, ist axial unmittelbar neben dem Sonnenrad 80 angeordnet. Die Breite der Wälzscheiben 4, 6 ist radial außen wesentlich schmaler als radial innen im Bereich der beiden Wälzlager 14, 18. Der Doppelexzenter wird wiederum durch die beiden radial versetzten und gegenseitig verschraubten Ringe 24, 26 gebildet. Insgesamt wird eine äußerst kompakte Bauweise des kompletten Getriebes erreicht.

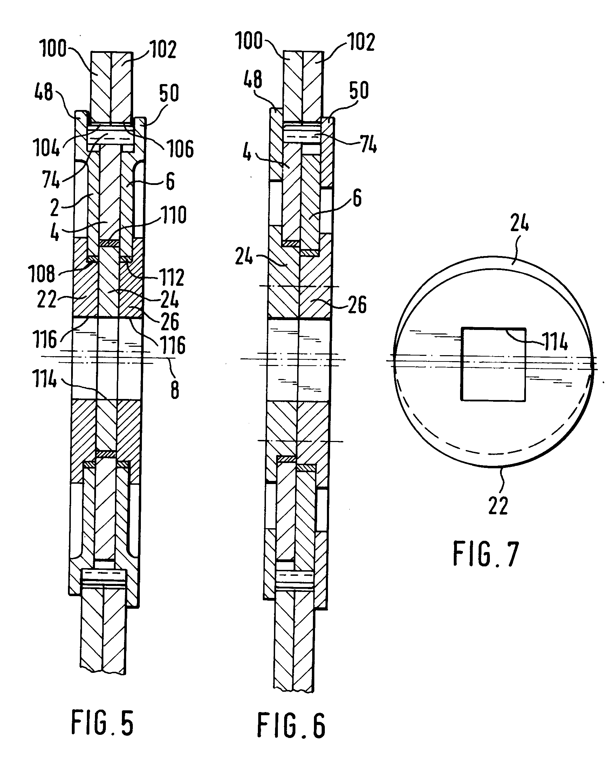

Die in Fig. 5 bis 7 dargestellten besonderen Ausführungsbeispiele zeigen manuell betätigbare Stellantriebe, wie sie insbesondere zur Einstellung von Sitzen in Kraftfahrzeugen zum Einsatz gelangen können. Mittels derartigen manuell betätigbaren Stellantrieben können Rückenlehnen ebenso gut verstellt werden wie auch die Sitzhöhe. Es sind zwei Verstellteile 100, 102 vorhanden, die jeweils in einer zentralen kreisförmigen Ausnehmung Innenverzahnungen 104, 106 mit unterschiedlichen Zähnezahlen aufweisen. Das eine Verstellelement 100 sei beispielsweise mit dem Sitz bzw. dem Chassis des Kraftfahrzeuges verbunden, während das andere Verstellelement 102 mit der verstellbaren Rückenlehne verbunden sein soll. Die Verstellelemente 100, 102 sind einschließlich der Verzahnung zweckmäßigerweise durch Ausstanzen hergestellt. Das mit einer Außenverzahnung und einer Innenverzahnung versehene Plantenrad 74 ist bei der Ausführungsform gemäß Fig. 5 auf drei Wälzscheiben 2, 4, 6 abgestützt, wobei die seitlichen Wälzscheiben 2, 6 je einen seitlichen Ringbund 48, 50 aufweisen. Wichtig ist hierbei, daß diese Ringbunde 48, 50 einen wesentlich größeren Außendurchmesser aufweisen als die Fußkreise der Innenverzahnungen 104, 106 der Verstellelemente. Damit wird eine funktionssichere axiale Abstützung erreicht; dies ist insbesondere beim Einsatz in Kraftfahrzeugen von Bedeutung, damit wenig Bauteile, geringer Materialeinsatz und geringem Herstellungsaufwand eine stabile Abstützung, beispielsweise der Rückenlehne bezüglich des Unterteils vom Sitz, sichergestellt wird. Die Wälzscheiben 2, 4, 6 sind mittels selbstschmierenden Feststofflagern 108, 110, 112 auf den Exzenterringen 22, 24, 26 abgestützt. Die Exzenterringe 22, 24, 26 sind aus den Stanzscheiben der Verstellelemente 100, 102 hergestellt. Auch die mittlere Wälzscheibe 4 kann aus dem aus einem der Verstellelemente ausgestanzten inneren Teil hergestellt sein. Somit wird der Abfall bei der Fertigung minimiert und insgesamt kann die vorgeschlagene Verstelleinheit mit geringem Materialaufwand gefertigt werden. Auch die beiden seitlichen Ringe 22, 26 enthalten radial nach außen gerichtete Ringbunde zur axialen Sicherung der Wälzscheiben 2, 4, 6. Der Stellantrieb zeichnet sich durch eine geringe axiale Baulänge aus und erfordert im Vergleich mit anderen Stellantrieben einen geringen Materialeinsatz, wobei insgesamt ein geringes Gewicht erreicht wird.

Die Exzenterringe 22, 24, 26 weisen in der Mitte je einen Durchbruch 114, 116 auf. Wie in Verbindung mit Fig. 7 ersichtlich, sind diese Durchbrüche 114, 116 als Vierkant ausgebildet und entsprechend zum Außenumfang exzentrisch angeordnet. Durch die Durchbrüche 114, 116 kann ein Vierkant durchgeführt werden, der ein Verstellrad zur manuellen Verstellung aufweist. Das Stellgetriebe zeichnet sich durch eine hohe Sicherheit bei Schockbelastung aus, die beispielsweise über die Rückenlehne und das Verstellelement 102 einwirkt und aufgenommen werden muß. Das flexible Planetenrad 74 weist insgesamt vier Eingriffszonen über den Umfang verteilt auf. Bei Belastung erfolgt die Kraftübertragung nicht nur in den Eingriffszonen, sondern darüberhinaus auch über die Zahnspitzen des Planetenrades außerhalb der Eingriffszonen auf den Zahnköpfen. Zwischen den vier Eingriffszonen sind vier derartige Stützzonen vorhanden und insgesamt kann mit geringem Bauvolumen die vor allem im Kraftfahrzeugbau gefor-derte Sicherheit gegen Stoßbelastungen gewährlei-stet werden.

Fig. 6 zeigt eine Ausführungsform des manuell betätigbaren Stellantriebes, wobei nur zwei Wälzscheiben 4, 6 und zwei Exzenterringe 24, 26 vorhanden sind. Auch hierbei weisen die beiden Exzenterringe 24, 26 radial nach außen gerichtete Bunde zur axialen Sicherung der Wälzscheiben 4, 6 auf. Desweiteren sind die Ringe bzw. Ringbunde 48, 50 zur axialen Sicherung bezüglich den Verstellelementen 100, 102 vorgesehen. Die Montage des Stellantriebes, und zwar sowohl gemäß Fig. 5 als auch gemäß Fig. 6 erfolgt in einfacher Weise durch direktes Verbinden der Exzenterringe 22 ggfs. 24 und 26, insbesondere durch Verschrauben, Nieten oder Punktschweißen. Bei der Ausführungsform von Fig. 6 sind die beiden Wälzscheiben 4, 6 aus den Stanzscheiben gefertigt, die beim Ausstanzen der Verstellelemente 100, 102 gemeinsam mit deren Innenverzahnungen 104, 106 als Abfall anfielen. Der minimale Material einsatz ist von besonderer Bedeutung, zumal derartige Stellantriebe für Kraftfahrzeuge in hohen Stückzahlen benötigt werden.

Fig. 8 zeigt eine Ausführungsform mit zwei Wälzscheiben 4, 6, die an ihren einander zugekehrten axialen Stirnflächen je einen Ringbund 126, 128 aufweisen. Radial außen enthalten die beiden Wälzscheiben 4, 6 an den axial beabstandeten Stirnflächen die bereits erläuterten Bunde 48, 50 zur Sicherung des Ringkörpers 10. Zwischen den beiden Exzenterringen 24, 26 ist der Flansch 38 der Antriebswelle 36 eingeflanscht, wobei entsprechend der Linie 34 die beiden Exzenterringe 24, 26 miteinander kraftschlüssig verschraubt und verspannt sind. Mittels den Ringbunden 90, 91 der beiden Exzenterringe 24, 26 werden erfindungsgemäß die beiden inneren Lagerringe der Lager 14, 16 axial festgelegt, während die Wälzscheiben 4, 6 über die Ringbunde 126, 128 auf den äußeren Lagerringen der genannten Lager 14, 16 axial festgelegt werden. Wie ersichtlich, wird durch diese besondere wechselseitige axiale Festlegung eine kompakte und schmale Bauweise erreicht. Die Wälzscheiben 4, 6 und der Lagerring weisen ebenso wie der Ringkörper 10 im wesentlichen die gleiche Breite auf und eine zuverlässige Abstützung der Wälzscheiben und des Ringkörpers wird sichergestellt. Für alle Ausführungsformen ist es darüberhinaus wichtig, die Höhe 130 der Ringbunde 48, 50 in radialer Richtung größer als die Exzentrizität bzw. den maximalen radialen Abstand zwischen den Auflageflächen 54 und 56 der Wälzscheiben 4, 6 für den Ringkörper 10 vorzugeben. Bei der hier dargestellten Ausführungsform weist die Antriebswelle 36 einen Zapfen 132 auf, welcher in den Exzenterring 24 hineinragt. Die Einstellschraube 32 ist in ein Gewinde dieses Zapfens 132 eingeschraubt, wobei in der vorstehend bereits erläuterten Weise die Exzentrizität dementsprechend eingestellt werden kann.

**Patentansprüche**

1. Lageranordnung mit wenigstens zwei Wälzscheiben (2, 4, 6), welche axial nebeneinander angeordnet und über jeweils ein Lager und einen Exzenterring (22, 24, 26) bezüglich eines radial inneren Drehkörpers exzentrisch abgestützt sind, wobei die Exzenterringe kraftschlüssig miteinander verbunden sind (34) und unter zeitweiliger Aufhebung des Kraftschlusses einer dieser Ringe relativ zu den anderen verstellbar ist und wobei radial außen auf den Wälzscheiben ein radial deformierbares Ringelement (10) angeordnet ist, auf welchem die Wälzscheiben abrollen, dadurch gekennzeichnet, daß das Ringelement (10) bezüglich der Wälzscheiben (2, 4, 6) mittels von den Wälzscheiben (2, 4, 6) radial vorstehenden Bunden (48, 50) oder Sicherungsringen, an welchen die axialen Stirnflächen des Ringelementes (10) dichtend anliegen, axial festgelegt ist und daß der verstellbare Exzenterring (24) beim Verstellen gegenüber den anderen Exzenterringen (22, 26) in radialer Richtung verschoben wird.

2. Lageranordnung nach Anspruch 1, dadurch gekennzeichnet, daß zwei Exzenterringe (22, 26) mittels eines auf den Drehkörper (36) befestigten Stützringes (28) zentriert sind, welcher mit seinen Stirnflächen in jeweils eine Umfangsnut (30) der Exzenterringe (22, 26) eingreift.

3. Lageranordnung nach Anspruch 2, dadurch gekennzeichnet, daß ein mittlerer Exzenterring (24) axial zwischen die beiden seitlichen Exzenterringe (22, 26) eingespannt ist.

4. Lageranordnung nach Anspruch 3, dadurch gekennzeichnet, daß zur radialen Einstellung des mittleren Exzenterringes (24) bezüglich der seitlichen Exzenterringe (22, 26) im Stützring (28) eine Einstellschraube (32) vorgesehen ist.

5. Lageranordnung nach einem der Ansprüche 1 bis 4, dadurch gekennzeichnet, daß das äußere Ringelement (10) einen über die axiale Länge sich erstreckenden Schlitz (58) aufweist.

6. Lageranordnung nach einem der Ansprüche 3 bis 5, dadurch gekennzeichnet, daß die Abrollbreite der mittleren Wälzscheibe (4) und/oder die Tragfähigkeit des Lagers (14) der mittleren Wälzscheibe (4) im wesentlichen gleich groß sind wie die Summe der Abrollflächen bzw. der Tragfähigkeiten der Lager (12, 16) der beiden seitlichen Wälzscheiben (2, 6).

7. Lageranordnung nach einem der Ansprüche 1 bis 6, dadurch gekennzeichnet, daß auf der Innenseite des Ringelementes (10) ein Stahlband (40) angeordnet ist, auf welchem die Wälzscheiben (2, 4, 6) abrollen.

8. Lageranordnung nach einem der Ansprüche 1 bis 7, gekennzeichnet durch den Einsatz in einem Planetengetriebe mit einem Planetenrad (74), das eine Außenverzahnung (76) und eine Innenverzahnung (78) aufweist, welche in definierten Eingriffszonen eines Sonnenrades (80) und eines äußeren Hohlrades (86) eingreifen.

9. Lageranordnung nach Anspruch 8, dadurch gekennzeichnet, daß das Sonnenrad (80) unmittelbar neben dem einen seitlichen Exzenterring (24) angeordnet ist.

10. Lageranordnung nach einem der Ansprüche 1 bis 9, gekennzeichnet durch die Integration in einen Stellantrieb, welcher zwei gegeneinander verstellbare Verstellelemente (100, 102) mit Innenverzahnungen mit unterschiedlichen Zähnezahlen aufweist, in welche das Planetenrad (74) mit seiner Außenverzahnung in vier über den Umfang gleichmäßig verteilten Eingriffszonen eingreift.

11. Lageranordnung nach Anspruch 10, dadurch gekennzeichnet, daß die Exzenterringe (22, 24, 26) im Zentrum einen Durchbruch (114, 116) für eine Antriebswelle aufweisen, wobei die Exzenterringe (22, 24, 26) drehfest miteinander verbunden sind.

12. Lageranordnung nach einem der Ansprüche 10 oder 11, dadurch gekennzeichnet, daß die Exzenterringe (22, 24, 26) axial beabstandete Ringbunde aufweisen, zwischen welchen die Wälzscheiben (2, 4) angeordnet und axial gesichert sind.

## Claims

1. A bearing arrangement including at least two rolling discs (2, 4, 6) which are arranged axially side by side and are eccentrically supported by way of in each case one bearing and one eccentric ring (22, 24, 26) with respect to a radially inner body of rotation, the eccentric rings being frictionally interconnected (34) and one of said rings being adjustable relative to the other ones under temporary release of the frictional connection and arranged radially outside on the rolling discs there being a radially deformable ring element (10) on which the rolling discs roll, characterized in that the ring element (10) is axially fixed with respect to the rolling discs (2, 4, 6) by means of collars (48, 50) or guard rings which project radially from the rolling discs (2, 4, 6) and against which the axial faces of the ring element (10) sealingly rest and that the adjustable eccentric ring (24) is moved in the radial direction as it is adjusted relative to the other eccentric rings (22, 26).

2. A bearing arrangement as claimed in claim 1, characterized in that two eccentric rings (22, 26) are centred by means of a back-up ring (28) mounted on the body of rotation (36), said back-up ring having its faces engaging with a peripheral groove (30) in each eccentric ring (22, 26).

3. A bearing arrangement as claimed in claim 2, characterized in that a middle eccentric ring (24) is axially restrained between the two lateral eccentric rings (22, 26).

4. A bearing arrangement as claimed in claim 3, characterized in that for radial adjustment of the middle eccentric ring (24) with respect to the lateral eccentric rings (22, 26) there is an adjusting screw (32) provided in the back-up ring (28).

5. A bearing arrangement as claimed in any one of claims 1 to 4, characterized in that the outer ring element (10) has a slot (58) extending over the axial length.

6. A bearing arrangement as claimed in any one of claims 3 to 5, characterized in that the rolling width of the middle rolling disc (4) and/or the bearing capacity of the bearing (14) of the middle rolling disc (4) are essentially equally great as the sum of the rolling widths and/or the bearing capacities of the bearings (12, 16) of the two lateral rolling discs (2, 6).

7. A bearing arrangement as claimed in any one of claims 1 to 6, characterized in that arrangement on the inside of the ring element (10) is a steel band (40) on which the rolling discs (2, 4, 6) roll.

8. A bearing arrangement as claimed in any one of claims 1 to 7, characterized by the use in a planetary gearing system with a planet gear (74) having external toothing (76) and internal toothing (78) which engage with defined zones of engagement of a sun gear (80) and of an outer internal gear (86).

9. A bearing arrangement as claimed in claim 8, characterized in that the sun gear (80) is arranged directly next to the one lateral eccentric ring (24).

10. A bearing arrangement as claimed in any one of claims 1 to 9, characterized by the integration in an actuating drive having two mutually adjustable adjusting elements (100, 102) which have internal toothing with different tooth numbers engaged by the planet gear (74) with the external toothing thereof in four equi-circumferential zones of engagement.

11. A bearing arrangement as claimed in claim 10, characterized in that the eccentric rings (22, 24, 26) have a central opening (114, 116) for a drive shaft, the eccentric rings (22, 24, 26) being non-rotatably interconnected.

12. A bearing arrangement as claimed in either of claims 10 or 11, characterized in that the eccentric rings (22, 24, 26) have axially spaced collars between which the rolling discs (2, 4) are arranged and axially secured.

**Revendications**

1. Dispositif formant palier comprenant au moins deux disques de roulement (2, 4, 6), lesquels sont disposés l'un à côté de l'autre dans le sens axial et sont appuyés d'une manière excentrée par rapport à un corps tournant qui est intérieur dans le sens radial, par l'intermédiaire à chaque fois d'un palier et d'une bague excentrique (22, 24, 26), cependant que les bagues excentriques sont reliées entre elles par conjugaison des forces (34), l'une de ces bagues pouvant être déplacée par rapport à l'autre lorsque la conjugaison des forces est provisoirement supprimée, et qu'un élément annulaire (10) qui est déformable dans le sens radial et sur lequel roulent les disques de roulement est disposé sur les disques de roulement, à l'extérieur dans le sens radial, caractérisé par le fait que l'élément annulaire (10) est fixé dans le sens axial par rapport aux disques de roulement (2, 4, 6) au moyen de collets (48, 50) ou de bagues de blocage qui font saillie dans le sens radial depuis les disques de roulement (2, 4, 6) et sur lesquelles les surfaces frontales axiales de l'élément annulaire (10) portent d'une manière étanche, et par le fait que la bague excentrique déplaçable (24) est déplacée dans la direction radiale lors de son déplacement par rapport aux autres bagues excentriques (22, 26).

2. Dispositif formant palier selon la revendication 1, caractérisé par le fait que deux bagues excentriques (22, 26) sont centrées au moyen d'une bague d'appui (28) qui est fixée sur le corps tournant (36) et qui, par ses surfaces frontales, pénètre à chaque fois dans une rainure périphérique (30) des bagues excentriques (22, 26).

3. Dispositif formant palier selon la revendication 2, caractérisé par le fait qu'une bague excentrique centrale (24) est serrée entre les deux bagues excentriques latérales (22, 26).

4. Dispositif formant palier selon la revendication 3, caractérisé par le fait qu'une vis de réglage (32) est prévue dans la bague d'appui (28) en vue du réglage radial de la bague excentrique centrale (24) par rapport aux bagues excentriques latérales (22, 26).

5. Dispositif formant palier selon l'une des revendications 1 à 4, caractérisé par le fait que l'élément annulaire extérieur (10) présente une fente (58) qui s'étend sur toute sa longueur dans le sens axial.

6. Dispositif formant palier selon l'une des revendications 3 à 5, caractérisé par le fait que la largeur de roulement du disque de roulement central (4) et/ou la résistance de portée du palier (14) du disque de roulement central (4) est égale, pour l'essentiel, à la somme des surfaces de roulement ou, respectivement, des résistances de portée des paliers (12, 16) des deux disques de roulement latéraux (2, 6).

7. Dispositif formant palier selon l'une des revendications 1 à 6, caractérisé par le fait qu'une bande en acier (40) sur laquelle roulent les disques de roulement (2, 4, 6) est disposée sur le côté intérieur de l'élément annulaire (10).

8. Dispositif formant palier selon l'une des revendications 1 à 7, caractérisé par son utilisation dans un train planétaire comprenant un satellite (74) qui comporte une denture extérieure (76) et une denture intérieure (78), lesquelles viennent en prise dans des zones d'attaque définies d'un engrenage planétaire (80) et d'une couronne extérieure (86).

9. Dispositif formant palier selon la revendication 8, caractérisé par le fait que l'engrenage planétaire (80) est disposé immédiatement à côté de l'une des bagues excentriques latérales (24).

10. Dispositif formant palier selon l'une des revendications 1 à 9, caractérisé par son intégration dans un entraînement de réglage comportant deux éléments de réglage (100, 102) qui peuvent être déplacés l'un par rapport à l'autre et qui comportent des dentures intérieures à nombres de dents différents dans lesquelles le satellite (74) vient en prise par sa denture extérieure dans quatre zones d'attaque régulièrement réparties sur le pourtour.

11. Dispositif formant palier selon la revendication 10, caractérisé par le fait que les bagues excentriques (22, 24, 26) présentent dans leur milieu un passage (114, 116) destiné à un arbre d'entraînement, les bagues excentriques (22, 24, 26) étant solidaires entre elles en rotation.

12. Dispositif formant palier selon l'une des revendications 10 ou 11, caractérisé par le fait que les bagues excentriques latérales (22, 24, 26) comportent des collets annulaires qui sont à distance entre eux dans le sens axial et entre lesquels les disques de roulement (2, 4) sont disposés et bloqués dans le sens axial.

FIG.1

FIG.2

FIG.3

FIG.4

FIG.8

FIG.5

FIG.6

FIG.7